# EUROPEAN PATENT SPECIFICATION

(11) **EP 3 514 904 B1**
(45) Date of publication and mention of the grant of the patent: **25.11.2020**
(21) Application number: 19152422.2
(22) Date of filing: 17.01.2019
(51) Int. Cl.: H02G 15/007, H02G 3/08, F21V 23/00

(54) **ILLUMINATION DEVICE AND ASSEMBLY FOR PREVENTING WIRES FROM BEING PULLED**
BELEUCHTUNGSVORRICHTUNG UND ANORDNUNG ZUR VERHINDERUNG DES HERAUSZIEHENS VON DRÄHTEN
DISPOSITIF D'ÉCLAIRAGE ET ENSEMBLE POUR EMPÊCHER LA TRACTION DES FILS

(30) Priority: 18.01.2018 CN 201820086938 U
(43) Date of publication of application: 24.07.2019
(73) Proprietor: Xiamen Eco Lighting Co., Ltd., Xiamen Fujian 361009 (CN)
(72) Inventor: LIN, Yaocong, Xiamen, Fujian 361009 (CN); LIU, Zulong, Xiamen, Fujian 361009 (CN); ZENG, Maojin, Xiamen, Fujian 361009 (CN)
(74) Representative: Proi World Intellectual Property GmbH

(56) References cited:
- EP-A1- 3 145 041
- JP-A- 2007 213 881

## Description

### TECHNICAL FIELD

The present invention relates to the field of electrical component and particularly to an assembly for preventing wires from being pulled and an illumination device.

### BACKGROUND

Wires are essential electrical elements of various electrical appliance. Generally, one end of a wire is exposed outside of the electrical appliance, while the other end of the wire is electrically connected with certain electrical component(s) in the electrical appliance. When the wire is pulled, the electrical connection may be damaged, leading to serious potential safety hazard to users. JP 2007 213881 A relates to a lighting system unit, lighting system and lighting system mechanism. EP 3 145 041 A1 relates to a multicore cable sealing structure.

### SUMMARY

The present invention aims to provide an assembly for preventing wires from being pulled. The assembly has a low manufacturing cost, and it can prevent the main body of a wire from being pulled out from its housing.

Another object of the present invention is to provide an illumination device with a long service life, a low manufacturing cost, and high production efficiency.

Embodiments of the present invention are realized as explained below:

An assembly for preventing wires from being pulled, includes:
a housing, the housing being provided with a first barrier component and a second barrier component; the first barrier component and the second barrier component being arranged at two opposite sides of a pulling prevention component, respectively; the first barrier component and the second barrier component defining a first groove, the first barrier component and the second barrier component configured for preventing the pulling prevention component from falling off from the first groove;
a wire body, one end of the wire body arranged in the housing, the other end of the wire body positioned outside the housing;
the pulling prevention component, the pulling prevention component sleeving around the wire body and engaged in the first groove, thus preventing the wire body from being pulled out from the housing.

The housing is provided with a second groove, which is configured for accommodating a driving board. The driving board is electrically connected with the wire body, wherein the driving board is arranged between the pulling prevention component and the second barrier component, the driving board abutting against both the pulling prevention component and the second barrier component.

In one embodiment of the present invention, the pulling prevention component is fixedly connected with the wire body.

In another embodiment of the present invention, the pulling prevention component comprises a position limiting plate and a protruding stage connected with the position limiting plate, the position limiting plate and the protruding stage both sleeving around the wire body.

In another embodiment of the present invention, the position limiting plate comprises a planar part at an edge thereof.

In another embodiment of the present invention, the housing is provided with a first barrier component and a second barrier component. The first barrier component and the second barrier component are arranged at two opposite sides of a pulling prevention component, respectively. The first barrier component and the second barrier component define a first groove. The first barrier component and the second barrier component are configured for preventing the pulling prevention component from falling off from the first groove.

In another embodiment of the present invention, the first barrier component comprises a first barrier part and an opposite second barrier part. The first barrier part and the second barrier part are arranged at two opposite sides of the wire body, respectively. The first barrier part and the second barrier part are positioned at a same side of the pulling prevention component. The first barrier part and the second barrier part work with each other to prevent the pulling prevention component from leaving the first groove.

In another embodiment of the present invention, the second barrier component comprises a third barrier part and a fourth barrier part. The third barrier part and the fourth barrier part are arranged at two opposite sides of the wire body, respectively.

The third barrier part and the fourth barrier part are positioned at a same side of the pulling prevention component. The first barrier part, the second barrier part, the third barrier part, and the fourth barrier part work together to prevent the pulling prevention component from leaving the first groove.

In another embodiment of the present invention, the driving board fixedly connected with both the pulling prevention component and the fourth barrier part.

In another embodiment of the present invention, the assembly for preventing wires from being pulled includes a pulling prevention component fixed on a wire. The pulling prevention component is arranged inside the housing, for preventing the wire from being pulled out of the housing. Electrical connection is realized by simple wire welding. There is no need to use any cover for locking wire or for pressing wire.

The present invention further provides an illumination device, which includes any of the above-mentioned assemblies for preventing wires from being pulled.

The embodiments of the present invention have the following advantages or benefits:
The present invention provides an assembly for preventing wires from being pulled. The assembly includes a housing, a wire body, and a pulling prevention component. The housing is provided with a first barrier component and a second barrier component. The first barrier component and the second barrier component are arranged at two opposite sides of the pulling prevention component. The first barrier component and the second barrier component define a first groove. The first barrier component and the second barrier component are configured for preventing the pulling prevention component from falling off from the first groove. The pulling prevention component sleeves around the wire body and is engaged in the first groove, thus preventing the wire body from being pulled out of the housing. When the wire body is pulled by accident, the electrical connection of the wire body may be damaged easily, thus causing potential safety hazard. The pulling prevention component tightly sleeves around the wire body and can prevent one end of the wire body from being pulled out from the housing when the other end of the wire body is pulled by a force (usually, the force is within 180 Newton). Accordingly, the safety and effectiveness of the electrical connection of the wire body is guaranteed. One end of the wire body is inside the housing; the other end of the wire body is outside the housing. When the wire body outside the hosing is pulled, the pulling prevention component cannot leave the first groove, hence the electrical connection of the wire body in the housing will not be affected by the pull. Accordingly, the effective service life of the electrical connection is greatly prolonged, the production cost thereof is reduced, and the electrical safety is guaranteed.

The present invention also provides an illumination device having the above assembly for preventing wires from being pulled. The illumination device has a low manufacturing cost, and a high safety factor. In an exemplary illumination device according to the present invention, the assembly for preventing wires from being pulled includes a pulling prevention head fixed on a wire. The pulling prevention head is arranged inside the illumination device, such as a lamp, for preventing the wire from being pulled. Electrical connection is realized by simple wire welding. There is no need to use any cover for locking wires as many prior art lamps need. Further, a cover component for pressing wire is eliminated. Accordingly, the manufacturing cost of such an illumination device can be lowered.

### BRIEF DESCRIPTION OF THE DRAWINGS

For a better understanding of the embodiments of the present invention, the accompanying drawings facilitating the description of the embodiments are briefly explained below. As can be understood, the accompanying drawings described below represent only some embodiments of the present invention and should not be regarded as posing any limitation to the protection scope of the present patent application. For those with ordinary skills in the field, other drawings may be derived according to what is shown in these accompanying drawings without creative work.
FIG. 1 is a schematic view showing the structure of an assembly for preventing wires from being pulled according to an embodiment of the present invention.
FIG. 2 is a schematic view showing the structure of a wire body according to an embodiment of the present invention.
FIG. 3 is a schematic view showing the structure of an assembly for preventing wires from being pulled where a driving assembly is removed.
FIG. 4 is an enlarged view of part IV shown in FIG. 3.

### Description of reference numbers

| | | | |
|---|---|---|---|
| 100 | Assembly for preventing wires from being pulled | 132 | First groove |
| 110 | Wire body | 134 | First barrier component |
| 112 | Wire | 135 | Second barrier component |
| 114 | Pulling prevention component | 136 | First barrier part |
| 116 | Position limiting plate | 137 | Third barrier part |
| 118 | Protruding stage | 138 | Second barrier part |
| 120 | Planar part | 139 | Fourth barrier part |
| 130 | Housing | 140 | Second groove |
| 150 | Driving assembly | 152 | Driving board |

### DETAILED DESCRIPTION

To illustrate the objects, technical scheme(s), and advantages of the present invention more clearly, the technical scheme(s) of the present invention will be described in details with reference to the accompanying drawings. Obviously, the described embodiments are just some but not all of the embodiments of the present invention. Usually, the elements indicated in the accompanying drawings can be designed and arranged according to various and different configurations.

Hence, the detailed description of the embodiments of the present invention herebelow is not intended to limit the protection scope of the present patent application, but just presenting certain selected embodiments of the present invention.

It should be noted that similar reference signs and letters used in the accompanying drawings refer to similar terms. Hence, once a term is defined in a drawing, there is no need to further define or explain it in subsequent drawings.

In the description of the present invention, it should be noted that the directional terms such as "up", "down", "left", "right", "inside", "outside", and the like are based on the directions or positions as indicated in the drawings or based the directions or positions of a product embodying the present invention in its normal use. These directional terms are just for facilitating the description of the present invention and should not be interpreted as any limitation to the present invention. The terms "first", "second", "third", "fourth" etc. are merely for the purpose of differentiation and should not be regarded as any indication or implication of the relative importance of the designated technical features.

Concerning the description of the present invention, it should be noted that, unless specific rules and limitations are provided, the terms "arrange", "assemble", "interconnect", "connect" should be understood broadly; for example, these terms may mean that components are fixed connected, detachably connected, or integrally connected; these terms may mean a mechanical connection or an electrical connection; these terms may mean a direct connection or an indirect connection, or a connection of the internal parts of two components.

### Embodiment

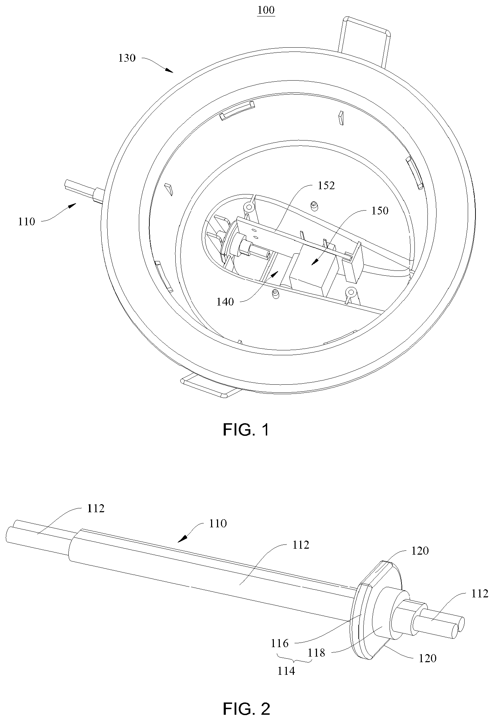

Referring to FIG. 1, which is a schematic view showing the structure of an assembly 100 for preventing wires from being pulled. The present embodiment provides the assembly 100 for preventing wires from being pulled. The assembly 100 mainly includes a wire body 110, a housing 130, and a driving assembly 150. The wire body 110 and the driving assembly 150 are both connected to the housing 130. The wire body 110 is electrically connected to the driving assembly 150.

Referring to FIG. 2, which is a schematic view showing the structure of a wire body 110. The wire body 110 includes a wire 112 and a component 114 for pulling prevention, or a pulling prevention component 114, connected with the wire 112. As shown in FIG. 2, the component 114 sleeves around the wire 112. In the present embodiment, the component 114 may be made of engineering plastic, e.g., polycarbonate (PC), Polyamide (PA), polypropylene (PP), or polybutylene terephthalate (PBT). In other embodiments, the component 114 may be made of other materials, e.g., metal, plastic, etc. Engineering plastics are industrial plastics used for industrial component or housing material. Such plastics feature a high mechanical strength, withstand high temperature, resist corrosion, resist abrasion, and are electrically insulative, and thus can replace metal in the manufacturing of certain mechanical components. This kind of material is light-weight and is relatively inexpensive, hence using it is beneficial for controlling the manufacturing cost of the wire body 110 and keeping the wire body 110 light-weight. In addition, if the pulling prevention component 114 is too heavy, it would be inconvenient for the installation and connection of the wire 112.

The pulling prevention component 114 sleeves around the wire 112 and is configured for preventing the wire 112 from being pulled out from the pulling prevention component 114. To meet the requirement that the wire 112 cannot be easily pulled out, it is required that the wire 112 will not fall out from the pulling prevention component 114 when a pulling force is no more than 180 Newton. The requirement can satisfy the pulling prevention function of most wires 112. If the wire 112 needs a higher tensile strength, a further security measure may be taken.

To achieve the tensile strength required above, the pulling prevention component 114 may be fixedly connected to the wire 112. For example, the pulling prevention component 114 is formed by injection molding, and is directly formed on wire 112, so that the pulling prevention component 114 is fixedly connected to the wire 112. The operation method is simple and the production efficiency is high. The method can achieve a seamless connection between the pulling prevention component 114 and the wire 112, thus guaranteeing the tensile strength of the wire 112.

In other embodiments, the pulling prevention component 114 and the wire 112 may be detachably connected, as long as the tensile strength of the wire 112 is guaranteed. Usually, to achieve the tensile strength, the pulling prevention component 114 and the wire 112 should be connected tightly. For example, a diameter of a nesting hole of the pulling prevention component 114 should be less than that of the wire 112, so that the pulling prevention component 114 and the wire 112 can be connected tightly. To guarantee a tight connection, if the diameter of the sleeving hole of the pulling prevention component 114 is too small to allow the wire 112 to pass through, the pulling prevention component 114 may be divided into two detachable parts, and the two parts cooperatively form the sleeving hole. Accordingly, the efficiency of connecting the pulling prevention component 114 and the wire 112 can be enhanced.

In the present embodiment, the pulling prevention component 114 may further include a position limiting plate 116 and a protruding stage 118 connected with the position limiting plate 116. The position limiting plate 116 and the protruding stage 118 both nest the wire 112. Generally, the larger the contact area between the pulling prevention component 114 and the wire 112 is, the more secure the connection between the pulling prevention component 114 and the wire 112 is. To ensure a sufficient contact area between the pulling prevention component 114 and the wire 112 and to control manufacturing cost of the pulling prevention component 114, a protruding stage 118 may be added to the position limiting plate 116. The position limiting plate 116 and the protruding stage 118 may be formed integrally during injection, but may also be connected detachably. In the present embodiment, the position limiting plate 116 and the protruding stage 118 are integrally formed. Therefore, the production efficiency is high, and the connection between the pulling prevention component 114 and the wire 112 is secured.

With much research effort, the Inventor has found out that, for manufacturing a pulling prevention component 114 according to its shape presented in Fig. 2, it is preferable that a thickness of the position limiting plate 116 is in a range from 1mm to 5mm, a width of the position limiting plate 116 is in a range from 2mm to 25mm, and a length of the position limiting plate 116 is in a range from 4mm to 40mm, the inner diameter of the sleeving hole is in a range from 1mm to 20mm, and a thickness of the protruding stage 118 is in a range from 2mm to 10mm. In certain embodiments, an outer diameter of the protruding stage is preferably 0.5-10mm larger than the inner diameter. The specific size of the pulling prevention component 114 and that of the protruding stage 118 can be adjusted according to size of the wire 112 and do not need to be regulated in present disclosure. The position limiting plate 116 and the protruding stage 118 made according to the above specification can not only reduce the manufacturing cost effectively but also ensure a proper contact area between the wire 112 and the pulling prevention component 114.

As shown in FIG. 2, the position limiting plate 116 includes planar parts 120 at an edge thereof. The position limiting plate 116 includes two planar parts 120 at two opposite sides. The planar parts 120 can increase a contact area between the position limiting plate 116 and the housing 130, thus enhancing stability of the position limiting plate 116 within the housing 130.

As shown in FIG. 2, two opposite ends of the wire 112 are positioned at two opposite sides of the pulling prevention component 114, respectively. The wire shown in FIG. 2 has an outmost protective layer at its two opposite ends removed, which is a measure for facilitating corresponding electrical connection.

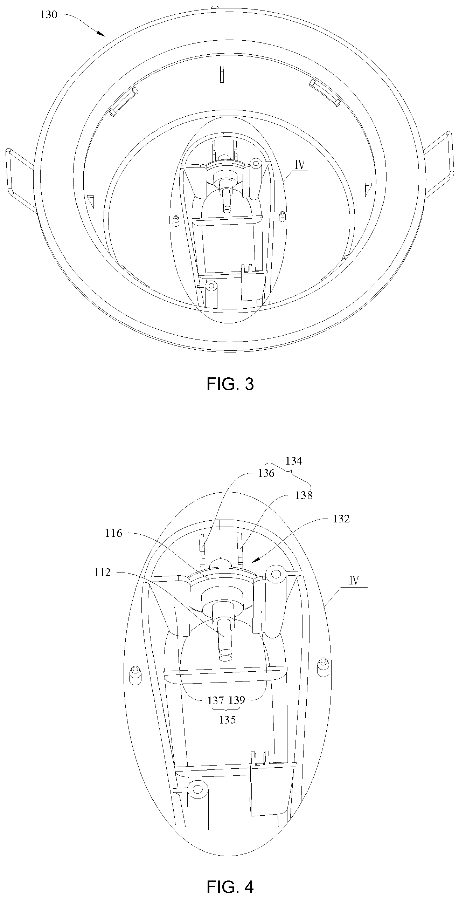

Referring to FIG. 3, which is a schematic view showing the structure of the assembly for preventing wires from being pulled with the driving assembly 150 removed. For a clearer view of the installation of the pulling prevention component 114, reference is made to FIG. 4, which shows an enlarged view of part IV of FIG. 3.

A first groove 132 is provided in the housing 130. The pulling prevention component 114 is engaged in the first groove 132, to prevent the wire 112 from being pulled out from the housing 130.

To help the position limiting plate 116 to better protect the electrical connection of the wire 112, a first barrier component 134 and a second barrier component 135 are provided in the housing 130. The first barrier component 134 and the second component 135 are arranged at two opposite sides of the wire body, respectively, thus preventing the pulling prevention component 114 from moving back and forward in the direction shown in FIG. 4. The first barrier component 134 and the second component 135 are arranged at a same side of the pulling prevention component 114. The first barrier component 134 and the second barrier component 135 define the first groove 132. The first barrier component 134 and the second barrier component 135 are configured for preventing the pulling prevention component 114 from falling off from the first groove 132.

When the wire 112 outside the housing 130 is pulled by accident, the first barrier component 134, the second barrier component 135, and the position limiting plate 116 work together to prevent the position limiting plate 116 from leaving the first groove 132, thus preventing the electrical connection between the wire 112 and the driving assembly 150 from being damaged. In other embodiments, a wall of the housing 130 may act as the first barrier component 134; the wall may be an inner wall of the housing 130. In some embodiments, a wall of the driving board may act as the second barrier component 135; the wall may be a sidewall of the driving board. That is, the pulling prevention component may be confined by an inner wall of the housing 130 and/or a sidewall of the driving board.

In the present embodiment, to make the limiting function of the first barrier component 134 more balanced, the first barrier component 134 may further includes a first barrier part 136 and an opposite second barrier part 138. As shown in FIG. 4, the first barrier part 136 and the second barrier part 138 are separated by the wire 112, and they are positioned at two opposite sides of the wire 112, respectively. The first barrier part 136 and the second barrier part 138 may be of any shape, e.g., both of L-shape. On one hand, this shape facilitates the fixing of the first barrier part 136 and the second barrier part 138 on the housing 130; on the other hand, this shape can limit the position of the position limiting plate 116 more securely.

Referring to FIG. 4, when the wire 112 outside the housing 130 is pulled forwards by accident, since the position limiting plate 116 and the protruding stage 118 are tightly connected to the wire 112, the position limiting plate 116 and the protruding stage 118 have a tendency of moving forwards; if such movement of the position limiting plate 116 and the protruding stage 118 were successful, the electrical connection between the wire 112 and the driving assembly 150 would be damaged. The first barrier part 136 and the second barrier part 138 work together to prevent the position limiting plate 116 from moving forwards, so that the position limiting plate 116 cannot move forwards successfully. Accordingly, the electrical connection between the wire 112 and the driving assembly 150 is prevented from being damaged. As shown in Fig. 4, a length of the position limiting plate 116 is larger than a spacing distance between the first barrier part 136 and the second barrier part 138, thus guaranteeing the limiting function of the first barrier part 136 and the second barrier part 138.

Further, to make the limiting function of the second barrier component 135 more balanced, the second barrier component 135 may further includes a third barrier part 137 and a fourth barrier part 139. As shown in FIG. 4, the third barrier part 137 and the fourth barrier part 139 are separated by the wire 112 and are positioned at two opposite sides of the wire 112, thus preventing the wire from moving backwards (the rear direction as shown in FIG. 4), and preventing the electrical connection of the wire 112 from being damaged. The third barrier part 137 and the fourth barrier part 139 are arranged at a same side of the pulling prevention component 114. The first barrier part 136 and the second barrier part 138 work together with the third barrier part 137 and the fourth barrier part 139 to prevent the pulling prevention component 114 from leaving the first groove 132.

In the present embodiment, to guarantee that the position limiting plate 116 is limited in time, the position limiting plate 116 is in contact with the first barrier part 136, the second barrier part 138, the third barrier part 137, and the fourth barrier part 139 after assembling. This configuration can eliminate the space within which the position limiting plate 116 could move back and forth, thus effectively preventing the electrical connection of the wire 112 from being damaged. In other embodiments, the position limiting plate 116 may be adhered to the four barrier parts, or the position limiting plate 116 may further be fixed to the four barrier parts via other connectors (e.g., screws). In this way, the position limiting plate 116 is prevented from moving in any direction, and accordingly, the effectiveness and the security of the electrical connection of the wire 112 can be guaranteed.

As shown in FIG. 4, four barrier parts cooperatively limit the movement of the position limiting plate 116. In the present embodiment, a spacing distance between the first barrier component 134 and the second barrier component 135 is equal to a thickness of the position limiting plate 116, so that the position limiting plate 116 is in good contact with the second barrier part 138 and the driving board 152 after the position limiting plate 116 is inserted in the gap between the second barrier part 138 and the driving board 152. In other embodiments, the spacing distance between the first barrier component 134 and the second barrier component 135 may be less than the thickness of the position limiting plate 116. Accordingly, the position limiting plate 116 can be secured firmly by the second barrier part 138 and the driving board 152, thus preventing the position limiting plate 116 from moving in a plurality of directions. Thus, the electrical connection between the wire 112 and the driving assembly 150 is well protected.

Referring to FIG. 1 again, a second groove 140 is further provided in the housing 130, and the driving assembly 150 is arranged in the second groove 140. The driving assembly 150 includes the driving board 152. Generally, the driving assembly 150 further includes some necessary electrical components of an illuminator, e.g., integrated circuits, resistance, capacitors, diodes, and inductance coils. The wire 112 may be directly welded on the driving board 152, thus achieving an electrical connection with the driving assembly 150.

As shown in FIG. 1, the driving board 152 is further assembled between the pulling prevention component 114 and the fourth barrier part 139, and the driving board 152 abuts against the pulling prevention component 114 and the fourth barrier part 139. In this configuration, the driving board 152 can further enhance the stability of the pulling prevention component 114, and further reduce the space within which the pulling prevention component 114 might move in the left and right directions as shown in FIG. 4. In other embodiments, the driving board 152 can be adhered to the pulling prevention component 114 and the fourth barrier part 139. In this way, the driving board 152 is fixedly connected with the pulling prevention component 114 and the fourth barrier part 139, thus further preventing the pulling prevention component 114 from moving.

The working principle of the assembly 100 for preventing wires from being pulled is as follows:
The assembly 100 for preventing wires from being pulled mainly includes the wire body 110, the housing 130, and the driving assembly 150. The wire body 110 includes the wire 112 and the pulling prevention component 114 connected with the wire 112. The pulling prevention component 114 nests the wire 112. The pulling prevention component 114 includes the position limiting plate 116 and the protruding stage 118 connected with the pulling prevention component 114. The protruding stage 118 can increase the contact area between the pulling prevention component 114 and the wire 112, and control the manufacturing cost of the pulling prevention component 114. The first barrier part 136, the second barrier part 138, the third barrier part 137, and the fourth barrier part 139, which are provided in the housing 130, work together with the driving board 152 to restrict the position limiting plate 116, thus preventing the pulling prevention component 116 from moving when the wire 112 is pulled, wherein such movement may cause safety issues such as damage to the electrical connection between the wire 112 and the driving assembly 150, disconnection, or exposure of the wire 112. When the wire 112 outside the housing 130 is pulled by accident, the position limiting plate 116 has a tendency to move. Since the position limiting plate 116 is tightly connected with the wire 112, if the movement of the position limiting plate 116 were successful, the position limiting plate 116 would lead one end of the wire 112 connecting with the driving assembly 150 to move, thus damaging the electrical connection between the wire 112 and the driving assembly 150. The four barrier parts and the driving board 152 work together to prevent the position limiting plate 116 from moving, thus successfully protecting the electrical connection between the wire 112 and the driving assembly 150. The assembly 100 for preventing wires from being pulled omits the use of a traditional cover for locking wire, and a typical cover for pressing wire. Accordingly, the production efficiency of the assembly 100 for preventing wires from being pulled is enhanced greatly, and the production cost of the assembly 100 is greatly reduced.

The present embodiment also provides an illumination device including the assembly 100 for preventing wires from being pulled 100. The illumination device has a low production cost, a relatively long service life, and an enhanced electrical.

The above are merely preferred embodiments of the present invention; they are not intended to limit the protection scope of the present patent application. Any equivalent structures made according to the description and the accompanying drawings of the present disclosure without departing from the idea of the present disclosure, or any equivalent structures applied in other relevant technical fields directly or indirectly are intended to be included in the patent protection scope of the present disclosure.

## Claims

1. An assembly (100) for preventing wires (112) from being pulled, wherein the assembly (100) comprises a housing (130), a wire body (110), and a pulling prevention component (114);
wherein
the housing (130) is provided with a first barrier component (134) and a second barrier component (135), the first barrier component (134) and the second barrier component (135) are arranged at two opposite sides of the pulling prevention component (114), the first barrier component (134) and the second barrier component (135) define a first groove (132), the first barrier component (134) and the second barrier component (135) are configured for preventing the pulling prevention component (114) from falling off from the first groove (132);
one end of the wire body (110) is arranged in the housing (130), another end of the wire body (110) is positioned outside the housing (130);
the pulling prevention component (114) sleeve around the wire body (110) and is engaged in the first groove (132), thus preventing the wire body (110) from being pulled out from the housing (130);
**characterized in that**:
wherein the housing (130) is provided with a second groove (140), the second groove (140) is configured for accommodating a driving board (152), the driving board (152) is electrically connected with the wire body (110);
wherein the driving board (152) is arranged between the pulling prevention component (114) and the second barrier component (135), the driving board (152) abutting against both the pulling prevention component (114) and the second barrier component (135).

2. The assembly (100) according to claim 1, wherein the pulling prevention component (114) is fixedly connected with the wire body (110).

3. The assembly (100) according to claim 1, wherein the pulling prevention component (114) comprises a position limiting plate (116) and a protruding stage (118) connected with the position limiting plate (116), both the position limiting plate (116) and the protruding stage (118) sleeving around the wire body (110).

4. The assembly (100) according to claim 3, wherein the position limiting plate (116) comprises a planar part (120) at an edge thereof.

5. The assembly (100) according to claim 1, wherein the first barrier component (134) comprises a first barrier part (136) and an opposite second barrier part (138), the first barrier part (136) and the second barrier part (138) are arranged at two opposite sides of the wire body (110), respectively, the first barrier part (136) and the second barrier part (138) are positioned at a same side of the pulling prevention component (114), the first barrier part (136) and the second barrier part (138) are configured to prevent the pulling prevention component (114) from leaving the first groove (132).

6. The assembly (100) according to claim 5, wherein the second barrier component (135) comprises a third barrier part (137) and a fourth barrier part (139), the third barrier part (137) and the fourth barrier part (139) are arranged at two opposite sides of the wire body (110), respectively, the third barrier part (137) and the fourth barrier part (139) are positioned at a same side of the pulling prevention component (114); the first barrier part (136) and the second barrier part (138) work with the third barrier part (137) and the fourth barrier part (139) to prevent the pulling prevention component (114) from leaving the first groove (132).

7. The assembly (100) according to claim 6, wherein the driving board (152) is fixedly connected with both the pulling prevention component (114) and the fourth barrier part (139).

8. An illumination device comprising the assembly (100) for preventing wires (112) from being pulled according to any of claims 1-7.

## Patentansprüche

1. Anordnung (100) zum Verhindern des Ziehens von Drähten (112), wobei die Anordnung (100) ein Gehäuse (130), einen Drahtkörper (110) und ein Zugverhinderungsbauteil (114) umfasst;
wobei das Gehäuse (130) mit einem ersten Barrierebauteil (134) und einem zweiten Barrierebauteil (135) versehen ist, das erste Barrierebauteil (134) und das zweite Barrierebauteil (135) an zwei gegenüberliegenden Seiten des Zugverhinderungsbauteils (114) angeordnet sind, das erste Barrierebauteil (134) und das zweite Barrierebauteil (135) eine erste Nut (132) definieren, das erste Barrierebauteil (134) und das zweite Barrierebauteil (135) konfiguriert sind, um zu verhindern, dass das Zugverhinderungsbauteil (114) aus der ersten Nut (132) herausfällt;
ein Ende des Drahtkörpers (110) ist in dem Gehäuse (130) angeordnet, ein anderes Ende des Drahtkörpers (110) ist außerhalb des Gehäuses (130) positioniert;
das Zugverhinderungsbauteil (114) ummantelt den Drahtkörper (110) und greift in die erste Rille (132) ein, wodurch verhindert wird, dass der Drahtkörper (110) aus dem Gehäuse (130) herausgezogen wird;
**dadurch gekennzeichnet, dass**:
wobei das Gehäuse (130) mit einer zweiten Nut (140) versehen ist, die zweite Nut (140) zur Aufnahme einer Treiberplatte (152) konfiguriert ist, die Treiberplatte (152) elektrisch mit dem Drahtkörper (110) verbunden ist;
wobei die Treiberplatte (152) zwischen dem Zugverhinderungsbauteil (114) und dem zweiten Barrierebauteil (135) angeordnet ist, wobei die Treiberplatte (152) sowohl gegen das Zugverhinderungsbauteil (114) als auch gegen das zweite Barrierebauteil (135) anstößt.

2. Anordnung (100) nach Anspruch 1, bei der das Zugverhinderungsbauteil (114) fest mit dem Drahtkörper (110) verbunden ist.

3. Anordnung (100) nach Anspruch 1, wobei das Zugverhinderungsbauteil (114) eine Positionsbegrenzungsplatte (116) und eine mit der Positionsbegrenzungsplatte (116) verbundene vorstehende Stufe (118) umfasst, wobei sowohl die Positionsbegrenzungsplatte (116) als auch die vorstehende Stufe (118) um den Drahtkörper (110) herum angeordnet sind.

4. Anordnung (100) nach Anspruch 3, wobei die Positionsbegrenzungsplatte (116) an einem Rand einen ebenen Teil (120) aufweist.

5. Anordnung (100) nach Anspruch 1, wobei das erste Barrierebauteil (134) einen ersten Barrierenteil (136) und einen gegenüberliegenden zweiten Barrierenteil (138) umfasst, wobei der erste Barrierenteil (136) und der zweite Barrierenteil (138) jeweils an zwei gegenüberliegenden Seiten des Drahtkörpers (110) angeordnet sind, das erste Barrierenteil (136) und das zweite Barrierenteil (138) auf derselben Seite des Zugverhinderungsbauteils (114) positioniert sind, das erste Barrierenteil (136) und das zweite Barrierenteil (138) so konfiguriert sind, dass sie verhindern, dass das Zugverhinderungsbauteil (114) die erste Nut (132) verlässt.

6. Anordnung (100) nach Anspruch 5, wobei das zweite Barrierebauteil (135) ein drittes Barrierenteil (137) und ein viertes Barrierenteil (139) umfasst, das dritte Barrierenteil (137) und das vierte Barrierenteil (139) jeweils an zwei gegenüberliegenden Seiten des Drahtkörpers (110) angeordnet sind, das dritte Barrierenteil (137) und das vierte Barrierenteil (139) an derselben Seite des Zugverhinderungsbauteils (114) positioniert sind; der erste Barrierenteil (136) und der zweite Barrierenteil (138) mit dem dritten Barrierenteil (137) und dem vierten Barrierenteil (139) zusammenwirken, um zu verhindern, dass das Zugverhinderungsbauteil (114) die erste Nut (132) verlässt.

7. Anordnung (100) nach Anspruch 6, bei der das Antriebsbrett (152) sowohl mit dem Zugverhinderungsbauteil (114) als auch mit dem vierten Barrierenteil (139) fest verbunden ist.

8. Beleuchtungsvorrichtung mit der Baugruppe (100) zur Verhinderung des Ziehens von Drähten (112) nach einem der Ansprüche 1-7.

## Revendications

1. Un ensemble (100) pour empêcher que des fils (112) soient tirés, dans lequel l'ensemble (100) comprend un logement (130), un corps de fil (110) et un composant de prévention de tirage (114) ;
dans lequel le bo tier (130) est muni d'un premier composant de barrière (134) et d'un second composant de barrière (135), le premier composant de barrière (134) et le second composant de barrière (135) sont disposés sur deux côtés opposés du composant de prévention de traction (114), le premier composant de barrière (134) et le second composant de barrière (135) définissent une première rainure (132), le premier composant de barrière (134) et le second composant de barrière (135) sont configurés pour empêcher le composant de prévention de traction (114) de tomber de la première rainure (132) ;
une extrémité du corps de fil (110) est disposée dans le boîtier (130), une autre extrémité du corps de fil (110) est positionnée à l'extérieur du boîtier (130) ;
le composant de prévention de traction (114) enveloppe le corps de fil (110) et est engagé dans la première rainure (132), empêchant ainsi le corps de fil (110) d'être tiré hors du boîtier (130) ;
**caractérisé en ce que** :
dans lequel le bo tier (130) est pourvu d'une deuxième rainure (140), la deuxième rainure (140) est configurée pour recevoir une carte d'entra nement (152), la carte d'entra nement (152) est connectée électriquement au corps de fil (110) ;
dans lequel la carte d'entraînement (152) est disposée entre le composant de prévention de la traction (114) et le second composant de barrière (135), la carte d'entraînement (152) venant en butée à la fois contre le composant de prévention de la traction (114) et le second composant de barrière (135).

2. L'ensemble (100) selon la revendication 1, dans lequel le composant de prévention de la traction (114) est relié de manière fixe au corps du fil (110).

3. L'ensemble (100) selon la revendication 1, dans lequel le composant de prévention de la traction (114) comprend une plaque de limitation de position (116) et un étage en saillie (118) relié à la plaque de limitation de position (116), la plaque de limitation de position (116) et l'étage en saillie (118) étant tous deux enroulés autour du corps de câble (110).

4. L'ensemble (100) selon la revendication 3, dans lequel la plaque de limitation de position (116) comprend une partie plane (120) sur un bord de celle-ci.

5. L'ensemble (100) selon la revendication 1, dans lequel le premier composant de barrière (134) comprend une première partie de barrière (136) et une seconde partie de barrière opposée (138), la première partie de barrière (136) et la seconde partie de barrière (138) sont disposées sur deux côtés opposés du corps de fil (110), respectivement, la première partie de barrière (136) et la deuxième partie de barrière (138) sont positionnées d'un même côté du composant de prévention de la traction (114), la première partie de barrière (136) et la deuxième partie de barrière (138) sont configurées pour empêcher le composant de prévention de la traction (114) de quitter la première rainure (132).

6. L'ensemble (100) selon la revendication 5, dans lequel le deuxième composant de barrière (135) comprend une troisième partie de barrière (137) et une quatrième partie de barrière (139), la troisième partie de barrière (137) et la quatrième partie de barrière (139) sont disposées sur deux côtés opposés du corps de fil (110), respectivement, la troisième partie de barrière (137) et la quatrième partie de barrière (139) sont positionnées sur un même côté du composant de prévention de la traction (114) ; la première partie de barrière (136) et la deuxième partie de barrière (138) fonctionnent avec la troisième partie de barrière (137) et la quatrième partie de barrière (139) pour empêcher le composant de prévention de la traction (114) de quitter la première rainure (132).

7. L'ensemble (100) selon la revendication 6, dans lequel la platine de commande (152) est reliée de manière fixe à la fois au composant de prévention de la traction (114) et à la quatrième partie de barrière (139).

8. Dispositif d'éclairage comprenant l'ensemble (100) pour empêcher la traction des fils (112) selon l'une des revendications 1 à 7.
